# EUROPÄISCHE PATENTSCHRIFT

(11) **EP 0 564 967 B1**
(45) Veröffentlichungstag und Bekanntmachung des Hinweises auf die Patenterteilung: **16.08.1995**
(21) Anmeldenummer: 93105310.2
(22) Anmeldetag: 31.03.1993
(51) Int. Cl.: B01D 46/10, C04B 38/00

(54) **Verfahren und Vorrichtung zur Herstellung eines Filters in Form eines Wabenkörper-Monolithen**
Process and apparatus for the production of a filter having the form of a honeycomb
Procédé et dispositif pour la fabrication d'un filtre en forme d'un nid d'abeilles

(30) Priorität: 08.04.1992 DE 4211787
(43) Veröffentlichungstag der Anmeldung: 13.10.1993
(73) Patentinhaber: Schott Glaswerke, 55122 Mainz (DE); CARL-ZEISS-STIFTUNG, 55122 Mainz (DE)
(72) Erfinder: Noky, Werner, W-6500 Mainz (DE)
(74) Vertreter: Fuchs Mehler Weiss

(56) Entgegenhaltungen:
- EP-A- 0 070 202
- US-A- 4 293 357
- US-A- 4 563 414

## Beschreibung

Die Erfindung betrifft ein Verfahren und eine Vorrichtung zur Herstellung eines Filters in Form eines keramischen Wabenkörper-Monolithen, und zwar ausgehend von einem Rohling des Wabenkörper-Monolithen.

Derartige Filter finden beispielsweise als Dieselrußfilter im Zuge der öffentlichen Umweltdiskussion zunehmend Einsatz in PKWs, LKWs und Bussen, die mit einem Dieselmotor angetrieben werden.

Die Wirkung eines derartigen Filters beruht darauf, daß die Kanäle des wabenförmigen Monolithen wechselseitig an beiden Seiten derartig verschlossen werden, daß das Abgas gezwungen wird, durch die porösen Wände zwischen den Kanälen hindurchzuströmen. Dabei dienen die Wände als eigentliche Filter für den in Partikel auftretenden Ruß oder - je nach Einsatzfall - auszufilternden Stoff. Freilich werden sich die Kanäle nach einiger Zeit mit Ruß o. dgl. zusetzen, weswegen ein solcher Filter von Zeit zur Zeit regeneriert werden muß, d.h. in der Regel erhitzt werden muß, damit die zurückgehaltenen Partikel oxidiert werden.

Die Rohlinge für die Wabenkörper bestehen häufig aus Sinterglaskeramik-Monolithen, die meist durch ein Extrudierverfahren mit anschließender Trocknung und Sinterung zur Verfügung gestellt werden. Durch das Trocknen und durch das Sintern schrumpft der Körper, und dies unter ungleichmäßiger Schrumpfung. Diese ungleichmäßige Schrumpfung resultiert in einer nicht kalkulierbaren Abweichung der Ist-Geometrie von der Soll-Geometrie eines idealisierten Wabenkörpers. Zusätzlich führt der Extrudiervorgang zu einem Verzug der Wabenstruktur.

Die besagten Abweichungen haben nun erheblichen Einfluß auf die weitere Verarbeitung des Wabenkörper-Monolithen, wenn es nämlich darum geht, die Kanäle auf beiden Stirnseiten wechselseitig zu verschließen.

Die ganze Tragweite des damit verbundenen Problems einer großtechnischen Herstellung wird deutlich anhand eines Standard-Monolithen mit einem Durchmesser von 5,66'' (14,4 cm). Das Wabenrohmaß beträgt ca. 3,6 x 3,6 mm, so daß ca. 1.400 Wabenkanäle pro Stirnseite mit einem Lochquerschnitt von jeweils 2,4 x 2,4 mm vorhanden sind. Auf jeder Stirnseite müssen daher wechselseitig etwa 700 Wabenöffnungen und damit Filterkanäle verschlossen werden. Aufgrund der erwähnten Abweichungen von der Sollgeometrie des Monolithen ist es nicht möglich, in diesem Falle die 700 Öffnungen pro Stirnseite mit einem Düsenkopf mit 700 Düsen auf einmal in einem Arbeitsgang zu verschließen. Auch das Verschließen jeden zweiten Kanals mittels der sogenannten Stöpselmasse per Hand ist nicht vertretbar im Hinblick auf die dabei entstehenden hohen Personalkosten.

Im Stand der Technik sind bereits Vorrichtungen und Verfahren zum wechselseitigen Verschließen der Wabenkanäle eines Wabenkörper-Monolithen vorgeschlagen worden. Beispielhaft wird auf die sehr anschauliche US-A-4 411 856 verwiesen. Darin wird vorgeschlagen, eine eine Stirnseite des Monolithen vollständig bedeckende Maske zu verwenden, die mit Durchgängen und mit zapfenförmigen Ansätzen auf der dem Monolithen zugewandten Seite versehen ist. Die Zapfen werden in die nicht zu verschließenden Kanäle gesetzt, wohingegen die Stöpselmasse durch die Durchgänge in der Maske in die Endbereiche der zu verschließenden Kanäle gebracht wird. Der bereits oben erwähnten Abweichung des Monolithen von einer idealisierten Sollgeometrie wird dadurch versucht Rechnung zu tragen, daß die verwendete Maske aus einem elastischen Material besteht. In engen Grenzen mag diese Methode anwendbar sein. Problematisch allerdings ist, daß der Abstand der erwähnten Zapfen zu den Durchgängen festgelegt ist, so daß der durch die Elastizität der Maske erzielte Ausgleich der Abweichungen des Monolithen von der Sollgeometrie auf relativ geringe Werte beschränkt bleibt.

Ein weiteres Verfahren ist bekannt geworden aus der US-A-4,557,773. Darin wird vorgeschlagen, die Stirnseite eines Monolithen zunächst mit einer Folie komplett abzudecken und danach mittels eines speziellen Werkzeuges diejenigen Kanäle wieder zu öffnen, in welche Stöpselmasse eingebracht werden soll. Es handelt sich hierbei also ebenso wie die vorerwähnten Verfahren um ein indirektes Verfahren, bei dem die nicht zu verschließenden Kanäle abgedeckt werden.

Schließlich sei auf das in der US-A-4,329,162 umrissene Verfahren hingewiesen, von welchem im übrigen im Oberbegriff des Anspruchs 1 ausgegangen wird. In der besagten Druckschrift wird erwähnt, daß eine Dosiervorrichtung mit (mehreren) Düsen direkt in die Kanäle eingefahren wird und durch die Düsen dann die Stöpselmasse in die jeweilig zu verschließenden Kanäle eingebracht wird. Zwar ist dieser Druckschrift zu entnehmen, daß ohne die weiter oben beschriebenen Verfahrensschritte zur Abdeckung der nicht zu verschließenden Kanäle gearbeitet wird. Gleichwohl wird sich dieses Verfahren nicht für eine großtechnische Anwendung eignen. Entweder weist der Düsenkopf sehr viele Düsen auf, daß das Verfahren an die Grenzen der Toleranzweiten bei der Herstellung des Wabenkörper-Rohlings stößt, oder aber die Dosiervorrichtung verfügt nur über sehr wenige Düsen, so daß das Verfahren unwirtschaftlich arbeitet dadurch, daß diese Dosiervorrichtung entsprechend häufig abgesenkt werden muß in die während dieses Arbeitsvorganges jeweilig zu verschließenden Kanäle.

Es ist die Aufgabe der vorliegenden Erfindung vor dem dargelegten Hintergrund, ein Verfahren zur Herstellung eines Filters in Form eines keramischen Wabenkörper-Monolithen zu schaffen, bei dem ausgehend von einem Rohling des Monolithen die Kanäle an den Stirnseiten wechselseitig im großtechnischen Maßstab mit einer Stöpselmasse verschlossen werden. Darüber hinaus soll eine Vorrichtung zur Durchführung des Verfahrens geschaffen werden.

Gelöst wird diese Aufgabe durch das Verfahren gemäß dem Anspruch 1 und durch die Vorrichtung gemäß Anspruch 4. Vorteilhafte Weiterbildungen ergeben sich aus den Unteransprüchen.

Verfahrensmäßig wird vorgeschlagen, Zonen von Kanälen auf beiden Stirnseiten zu ermitteln, die in vorgebbaren Toleranzen der Sollgeometrie eines idealisierten Wabenkörpers entsprechen, wobei die Zonen eine möglichst hohe Anzahl von Kanälen beinhalten soll. Die Zonen korrespondieren mit Dosierköpfen einer Dosiervorrichtung. Die Dosierköpfe mit unterschiedlichen Anzahlen von Düsen, die in die zu verschließenden Kanäle abgesenkt werden, um die zähflüssige Stöpselmasse in deren Endbereich einzubringen, werden motorisch so verfahren und angesteuert, daß entsprechend der genannten Ermittlung der Zonen von Kanälen der Dosierkopf mit der höchsten Anzahl von Düsen am häufigsten zum Einsatz kommt. Sind alle diese Zonen abgearbeitet, wird der Dosierkopf mit der nächstniedrigeren Anzahl von Düsen verwendet. Dies wird solange fortgeführt, bis alle vorgesehenen Kanäle verschlossen sind, was auch bedeuten kann, daß einzelne Kanäle mit einem Dosierkopf mit lediglich einer einzelnen Düse angesteuert werden. Der so vorbereitete Wabenkörper-Monolith wird anschließend einem Keramisierungsprozeß unterworfen, bei dem der Wabenkörper nochmals schrumpft. Bei geeigneter Materialwahl für die Stöpselmasse wird diese weniger schrumpfen als das Material des Wabenkörpers, so daß eine fester Sitz des Stöpsels in den Endbereichen der Kanäle gewährleistet ist.

In bevorzugter Weise wird zunächst die erste Stirnseite von einem Bildaufnehmer, beispielsweise einer Fernsehkamera, abgetastet und das abgetastete Bild in einem Speicher eines Rechners abgelegt.

Der Rechner sucht das Bild nach zusammenhängenden Zonen von Kanälen ab, die in vorgebbaren Toleranzen der Sollgeometrie entsprechender Zonen eines idealisierten Wabenkörper-Monolithen entsprechen. Dieses Aufsuchen von zusammenhängenden Zonen erfolgt programmgesteuert. Sodann wird die Abarbeitungsbahn der durch den Rechner angesteuerten Dosierköpfe festgelegt. Dies geschieht in Übereinstimmung mit der Erfindung nach der Maßgabe, daß möglichst der Dosierkopf mit den meisten Düsen am häufigsten zum Einsatz kommt. Hierdurch wird- wie leicht einzusehen ist - die Zeit für das Verschließen der Kanäle optimiert, d.h. minimiert, indem nämlich möglichst viele Kanäle simultan verschlossen werden. In den Restzonen, beispielsweise am Rande des Monolithen, werden Zonen mit nur noch wenigen zu verschließenden Kanälen übrig bleiben, für die dann ein Dosierkopf mit weniger, beispielsweise zwei oder vier Düsen, zum Einsatz kommt.

Entsprechend der festgelegten Abarbeitungsbahn werden die Düsen der jeweiligen Dosierköpfe in die zu verschließenden Kanäle abgesenkt und die zähflüssige Stöpselmasse wird in die Endbereiche der Kanäle eingebracht, woraufhin die Düsen wieder aus den Kanälen herausbewegt werden.

Nachdem die eine Stirnseite des Monolithen so behandelt worden ist und entsprechend alle vorgesehenen Kanäle mit der Stöpselmasse verschlossen worden sind, wird der Monolith um 180° Grad gedreht. Die Kanäle werden auf der anderen Stirnseite in entsprechender Weise verschlossen, allerdings in einem komplementären Muster wie zu jenem auf der ersten Stirnseite. Erst hierdurch wird ja der Monolith überhaupt zum Filter.

Vorteilhaft bilden die Umrisse der ermittelten Zonen von Kanälen ein Rechteck. Diese Verfahrensweise korrespondiert mit einer gegenständlichen Ausbildung der Dosierköpfe, bei denen die Düsen in einer rechteckigen Matrix angeordnet sind.

Die erfindungsgemäße Vorrichtung zur Durchführung des Verfahrens weist die folgenden Komponenten auf:
a) Eine in den drei räumlichen Achsen verfahrbare mechanische Verfahreinheit, wie eine Schlitteneinrichtung, die eine um ihre Hochachse durch eine Drehvorrichtung motorisch verschwenkbare Spann- und Wendeeinrichtung aufweist. In die letztere ist der Wabenkörper-Monolith um die Horizontalachse verschwenkbar einspannbar.
b) Einen über der einen Stirnseite des in der Spann- und Wendeeinrichtung eingespannten Monolithen angeordneten Bildaufnehmer, wie beispielsweise eine Fernsehkamera, der die Stirnseite des Monolithen abtastet und die Bildinformationen an einen Rechner leitet, der sie in seinem Speicher ablegt.
c) Mindestens zwei Dosierköpfe mit jeweils unterschiedlicher Anzahl von Düsen, die über Leitungen mit einer Dosieranlage für die zähflüssige Stöpselmasse verbunden sind und an die der Monolith durch Ansteuerung der Schlitteneinrichtung sowie der Spann- und Wendeeinrichtung herangefahren werden kann gemäß der vorher erfolgten Festlegung der Abarbeitungsbahn durch den Rechner zum Einbringen der Stöpselmasse in die Endbereiche der Kanäle des Monolithen.

Bevorzugt sind die Dosierköpfe und der Bildaufnehmer in einem Rahmen starr gelagert, und zwar überhalb des in der Spann- und Wendeeinrichtung gehaltenen Monolithen, wobei die eine zu bearbeitende Stirnseite des Monolithen dem Bildaufnehmer und den Dosierköpfen zugewandt ist. Rechnergesteuert wird dann der Monolith über die Schlitteneinrichtung entsprechend der festgelegten Abarbeitungsbahn an den jeweiligen Dosierkopf herangefahren, woraufhin dessen Düsen in die während eines Arbeitstaktes jeweilig zu verschließenden Kanäle im Monolithen eingeführt werden, wozu die Schlitteneinrichtung eine entsprechende Hubbewegung ausführt. Nach Erreichen dieser Position des Monolithen veranlaßt der Rechner die Dosieranlage, daß Stöpselmasse über die entsprechenden Leitungen in die betreffenden Düsen gedrückt wird und in die Endbereiche der betreffenden Kanäle eingespritzt wird. Vorzugsweise wird der Monolith während des Einspritzvorganges entsprechend der Einspritzgeschwindigkeit und der Einspritzmenge nach unten weggeführt, so daß der Verschluß der Kanäle durch die Stöpselmasse bündig mit der Stirnseite des Monolithen abschließt. Ist vom Rechner eine weitere Zone auf der Stirnseite ermittelt worden, die an denselben Dosierkopf geführt werden kann, so verfährt die Schlitteneinrichtung den Monolithen um die entsprechende Strecke, woraufhin der Vorgang wiederholt wird. Ist keine weitere Zone ermittelt worden, die mit demselben Dosierkopf bearbeitet werden kann aufgrund größerer Abweichungen von der Sollgeometrie eines idealisierten Wabenkörper-Monolithen, so wird die Schlitteneinrichtung den eingespannten Monolithen zu einem anderen ausgewählten Dosierkopf mit weniger Düsen verfahren, an dem der Verschlußvorgang in entsprechender Weise durchgeführt wird.

Nach dem Verschluß aller auf der ersten Stirnseite in Frage kommenden Kanäle wird die Spann- und Wendeeinrichtung den Monolithen um 180° Grad drehen. Die Vorrichtung verfährt dann mit der zweiten Stirnseite in entsprechender Weise wie mit der ersten Stirnseite, wobei allerdings das Verschlußmuster komplementär ist zu jenem auf der ersten Stirnseite, so daß sich die Filterkanäle ausbilden. Die Erzeugung des komplementären Verschlußmusters auf der zweiten Stirnseite des Monolithen bereitet keine Schwierigkeiten, da das Verschlußmuster der ersten Stirnseite im Speicher des Rechners abgelegt ist. Die Erzeugung des komplementären Musters ist daher eine von der Software des Rechners einfach zu bewerkstellende Aufgabe.

Vorzugsweise sind die Düsen der Dosierköpfe in einer rechteckigen Gesamtanordnung jeweils diagonal gegenüberliegend angeordnet. Dieser Ausbildung korrespondiert mit dem bevorzugten Verfahrensmerkmal, wonach die Umrisse der ermittelten Zonen von Kanälen ein Rechteck bilden.

Das erfindungsgemäße Verfahren sowie die Vorrichtung erfüllen die Anforderungen einer Massenproduktion in vorbildlicher Weise. So können die Kanäle eines Referenz-Monolithen mit den eingangs erwähnten Abmessungen und der erwähnten Anzahl von Kanälen innerhalb etwa 15 Minuten wechselseitig verschlossen werden.

Der so vorbereitete Monolith wird dann einem an sich bekannten Keramisierungsprozeß unterworfen.

Die Erfindung wird kurz anhand der Zeichnungsfiguren näher erläutert.

Es zeigt:
- Figur 1: eine schematische Aufsicht auf eine Stirnseite eines Wabenkörper-Monolithen mit schematisiert dargestellten Zonen von Kanälen unterschiedlicher Größe,
- Figur 2: eine Prinzipdarstellung der erfindungsgemäßen Vorrichtung.

Nachfolgend bezeichnen dieselben Bezugszeichen gleiche Teile.

Der Wabenkörper-Monolith 1 weist eine Vielzahl von Kanälen 6 auf, die voneinander durch die Kanalwände 7 getrennt sind. Diese Kanalwände 7 sind porös und üben nach dem wechselweisen Verschluß der Kanäle 6 auf beiden Stirnseiten des Monolithen 1 die eigentliche Filterfunktion aus, indem nämlich Partikel von den Wänden 7 zurückgehalten werden, wohingegen Abgase durch die Wände hindurch in die benachbarten Kanäle treten können, die auf der anderen Stirnseite unverschlossen sind und aus denen daher die Abgase austreten können. Die Außenwandung 8 des Monolithen ist im übrigen abgasundurchlässig.

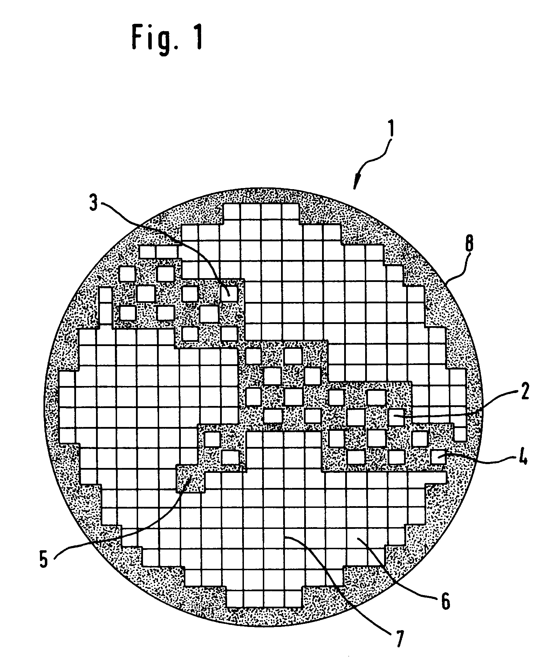

Die Geometrie des in Figur 1 dargestellten Monolithen ist idealisiert. In der Realität treten nicht unerhebliche Abweichungen von dieser Sollgeometrie in Folge unterschiedlicher Schrumpfung beim Trocknen und Sintern des Monolithen sowie in Folge des Verzugs der Wabenstruktur beim Extrudieren auf.

In Figur 1 erkennbar sind schematisiert dargestellt Zonen 2,3,4 und 5, welche Zonen von Kanälen 6 repräsentieren sollen, die in vorgebbaren Toleranzen der Sollgeometrie eines idealisierten Wabenkörper-Monolithen entsprechen. Die besagten Zonen sind im dargestellten Ausführungsbeispiel quadratisch ausgebildet. Die hellbelassenen Felder innerhalb der Zonen weisen auf diejenigen Kanäle hin, die bei der Durchführung des Verfahrens offengelassen werden, wohingegen die geschwärzten Stellen auf denjenigen Kanälen 6 liegen, welche zu verschließen sind. Die geschwärzten Stellen sind dann ebenfalls die Positionen, an denen ein zugeordneter Dosierkopf die Düsen aufweist, mittels derer die Stöpselmasse in die betreffenden Kanäle eingespritzt wird. So übergreift die Zone 2 insgesamt 16 Kanäle von denen 8 verschlossen werden sollen. Das entsprechende Verhältnis in der Zone 3 beträgt 9:4, bei der Zone 4 4:2. Die Zone 5 repräsentiert lediglich einen einzelnen Kanal 6. In diesem Falle muß der betreffende Kanal durch einen Dosierkopf mit nur einer Düse verschlossen werden, da die geometrischen Abweichungen so groß sind, daß kein anderer Dosierkopf mit mehreren Düsen verwendet werden kann.

Gemäß dem erfindungsgemäßen Verfahren wird nun eine Stirnseite des Monolithen 1 abgetastet und die Bildinformation in einem Speicher eines Rechners abgelegt. Sodann werden programmgesteuert die Zentren der Kanäle ermittelt. Die Software des Rechners legt nun quasi die Raster der Zonen 2 bis 5 über die abgespeicherte Bildinformation, wobei im Sinne einer Optimierung versucht wird, die größte Zone 2 möglichst häufig anwenden zu können. Gelingt dies nicht, werden kleinere Zonen über die Bildinformation im Speicher des Rechners gelegt, so lange, bis schließlich alle Kanäle softwaremäßig in Zonenbereiche eingeteilt sind. Hieraus errechnet der Rechner sodann eine Abarbeitungsbahn, die festlegt, an welche Dosierköpfe in welcher Reihenfolge der Monolith 1 herangefahren werden soll. Beginnend mit der größten Zone 2 wird der Monolith 1 also beispielsweise zunächst an den Dosierkopf mit der größten Anzahl von Düsen, die im selben Muster wie die Zone 2 angeordnet sind, herangeführt. In dem erhofften Falle, daß noch mehrere Zonen dieser Größe ermittelt worden sind, wird der Monolith entsprechend verfahren und nochmals oder mehrmalig an verschiedenen Stellen an den größten Dosierkopf herangefahren. Danach werden beispielsweise die nächst kleineren ermittelten Zonen des Monolithen an den nächst kleineren Dosierkopf herangefahren, bis schließlich Kanäle übrig bleiben können, die eine gesonderte Behandlung durch einen Dosierkopf mit nur einer Düse erforderlich machen.

Nach der Durchführung dieses Verfahrens sind die Kanäle 6 des Monolithen 1 auf einer seiner Stirnflächen verschlossen. Der Monolith wird sodann um 180° Grad gedreht und entsprechend verfahren, wobei allerdings ein komplementäres Verschlußmuster für die Kanäle eingehalten wird.

Nach dem gezielten Verschließen der Kanäle 6 auf beiden Stirnseiten des Monolithen 1 wird dieser einem üblichen Keramisierungsprozeß unterworfen, an dessen Ende der fertige Filter steht.

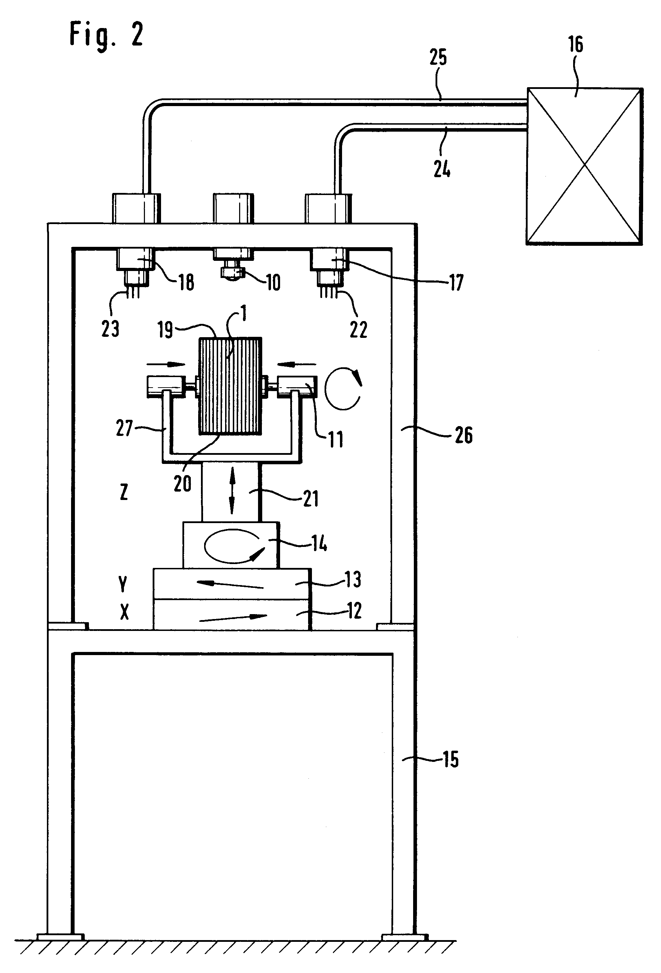

Die Vorrichtung zur Durchführung des Verfahrens ist schematisiert in Figur 2 dargestellt.

Ein Grundrahmen 15 trägt eine motorisch-verfahrbare Schlitteneinrichtung 12,13 und 21, zwischen denen noch eine Drehvorrichtung 14 geschaltet ist. Die Schlitteneinrichtung gestattet das Verfahren in allen drei Raumachsen eines von ihr getragenen Bügels 27, an der eine Spann- und Wendeeinrichtung 11 angebracht ist. Diese Spann- und Wendeeinrichtung 11 spannt zwischen ihren Backen einen Wabenkörper-Monolithen 1 ein, dessen beide Stirnseiten 19 und 20 in der bereits beschriebenen Weise bearbeitet werden sollen. Die Schlitteneinrichtung 12,13 und 21 sowie die Drehvorrichtung 14 und die Spann- und Wendeeinrichtung 11 werden von einem (nicht dargestellten) Rechner angesteuert in Übereinstimmung mit der vom Rechner festgelegten Abarbeitungsbahn.

Das Grundgestell 15 stützt darüberhinaus ein die Schlitteneinrichtung sowie die Spann- und Wendeeinrichtung übergreifenden Rahmen 26. Oberhalb des Monolithen 1 ist eine Kamera 10 als Bildaufnehmer fest in dem Rahmen 26 eingelassen. Die Hauptachse der Kamera 10 ist mit der Hauptachse des Monolithen 1 ausgerichtet. Darüberhinaus sind in der Figur 2 dargestellt zwei Dosierköpfe 17 und 18, die ebenfalls fest in dem Rahmen 26 eingelassen sind. Diese sind über Leitungen 24 und 25 mit einer Dosieranlage 16 verbunden und werden rechnergesteuert mit der in der Dosieranlage 16 enthaltenen zähflüssigen Stöpselmasse gespeist.

Die Dosierköpfe weisen unterschiedliche Anzahlen von Düsen 22 und 23 auf. Entsprechend dem Ergebnis der Bildverarbeitung werden die Dosierköpfe 22 und 23 von den Schlitteneinrichtung angefahren und der Monolith 1 durch die Komponente 21 an den jeweiligen Dosierkopf herangefahren, der dann in die festgelegten Kanäle 6 im Monolithen 1 die Stöpselmasse einspritzt.

## Patentansprüche

1. Verfahren zur Herstellung eines Filters in Form eines keramischen Wabenkörper-Monolithen (1) mit einer Vielzahl durchgehender Kanäle (6), die an den Stirnseiten (19,20) des Monolithen (1) wechselseitig mit einem Stöpsel verschlossen sind, ausgehend von einem Rohling des Wabenkörper-Monolithen aus keramisierbarem Material mit beidseitig offenen Kanälen (6), wobei die Stöpselmasse in die jeweilig zu verschließenden Kanäle direkt von einem Düsen aufweisenden Dosierkopf einer Dosiervorrichtung eingebracht wird,
dadurch gekennzeichnet, daß
- Zonen (2, 3, 4, 5) von Kanälen (6) auf beiden Stirnseiten (19,20) ermittelt werden, die in vorgebbaren Toleranzen der Sollgeometrie eines idealisierten Wabenkörper-Monolithen entsprechen, mit der Maßgabe, daß die Zonen eine möglichst hohe Anzahl von Kanälen (6) beinhalten,
- Dosierköpfe (17,18) der Dosiervorrichtung mit unterschiedlichen Anzahlen von Düsen, die in die zu verschließenden Kanäle (6) abgesenkt werden, um die zähflüssige Stöpselmasse in deren Endbereich einzubringen, so motorisch verfahren und angesteuert werden, daß entsprechend der genannten Ermittlung der Zonen von Kanälen (6) der Dosierkopf (17) mit der höchsten Anzahl von Düsen (22) am häufigsten zum Einsatz kommt und danach der Dosierkopf mit der nächstniedrigeren Anzahl von Düsen verwendet wird, solange, bis alle vorgesehenen Kanäle (6) verschlossen sind, und der so vorbereitete Wabenkörper-Monolith (1) anschließend einem Keramisierungsprozeß unterworfen wird.

2. Verfahren nach Anspruch 1, bei dem
- zunächst die erste Stirnseite (19) von einem Bildaufnehmer (10) abgetastet und das abgetastete Bild in einem Speicher eines Rechners abgelegt wird,
- der Rechner das Bild nach zusammenhängenden Zonen (2, 3, 4, 5) von Kanälen (6) absucht, die mit vorgebbaren Toleranzen der Sollgeometrie einer entsprechenden Zone eines idealisierten Wabenkörper-Monolithen entsprechen,
- die Abarbeitungsbahn der durch den Rechner angesteuerten Dosierköpfe (17,18) festgelegt wird,
- entsprechend der festgelegten Abarbeitungsbahn die Düsen (22, 23) der jeweiligen Dosierköpfe (17,18) in die zu verschließenden Kanäle abgesenkt werden, die Stöpselmasse in die Endbereiche der Kanäle eingebracht wird und hiernach die Düsen (22,23) aus diesen herausbewegt werden,
- der Monolith (1) nach Verstöpseln der Kanäle auf der ersten Stirnseite (19) um 180° Grad gedreht wird und in entsprechender Weise die Kanäle auf der anderen Stirnseite (20) in einem zu jenem auf der ersten Stirnseite (19) komplementären Muster verschlossen werden.

3. Verfahren nach Anspruch 1 oder 2, bei dem die Umrisse der ermittelten Zonen ein Rechteck bilden.

4. Vorrichtung zur Durchführung des Verfahrens nach einem der Ansprüche 1 bis 3, mit
- einer in den drei räumlichen Achsen (x,y,z) motorisch verfahrbaren Schlitteneinrichtung (12,13,21), die eine um ihre Hochachse durch eine Drehvorrichtung (14) motorisch verschwenkbare Spann- und Wendeeinrichtung (11) aufweist, in welcher der Wabenkörper-Monolith (1) um die Horizontalachse (x) verschwenkbar einspannbar ist,
- einem über der einen Stirnseite (19) des in der Spann- und Wendeeinrichtung (11) eingespannten Monolithen (1) angeordneten Bildaufnehmer (10), der die Stirnseite (19) abtastet und die Bildinformationen an einen Speicher eines Rechners leitet,
- mindestens zwei Dosierköpfen (17,18) mit jeweils unterschiedlicher Anzahl von Düsen (22,23), die über Leitungen (24,25) mit einer Dosieranlage (16) für die zähflüssige Stöpselmasse verbunden sind und an die heran der Monolith (1) durch Ansteuerung der Schlitteneinrichtung (12,13,21) sowie der Spann- und Wendeeinrichtung (11) gemäß der Festlegung der Abarbeitungsbahn durch den Rechner gefahren werden kann zum Einbringen der Stöpselmasse in die Endbereiche der Kanäle (6) des Monolithen (1).

5. Vorrichtung nach Anspruch 4, bei der die Dosierköpfe (17,18) und der Bildaufnehmer (10) in einem Rahmen (26) starr gelagert überhalb des in der Spann- und Wendeeinrichtung (11) gehaltenen Monolithen (1) angeordnet sind.

6. Vorrichtung nach Anspruch 4 oder 5, bei der die Düsen der Dosierköpfe (17, 18) in einer quadratischen Gesamtanordnung jeweils diagonal gegenüberliegend angeordnet sind.

## Claims

1. Process for producing a filter in the form of a ceramic honeycomb monolith (1) having a plurality of through channels (6), which at the end faces (19, 20) of the monolith (1) are closed at alternate ends by a plug, starting with a moulded blank of the honeycomb monolith made of ceramizable material and having channels (6) open at both ends, the plug substance being introduced into the channels which are to be closed directly by a nozzle-holding dosing head of a dosing apparatus,
characterized in that
- zones (2, 3, 4, 5) of channels (6) at both end faces (19, 20) are determined which within preselectable tolerances correspond to the setpoint geometry of an ideal honeycomb monolith, with the proviso that the zones contain the highest possible number of channels (6),
- dosing heads (17, 18) of the dosing apparatus, having differing numbers of nozzles which are lowered into the channels (6) to be closed in order to introduce the viscous plug substance into their end region, are motor-driven and -controlled in such a manner that, in accordance with said determination of the zones of channels (6), the dosing head (17) with the highest number of nozzles (22) is used most frequently and then the dosing head with the second highest number of nozzles is used and so on until all of the provided channels (6) are closed, and the honeycomb monolith (1) thus prepared is then subjected to a ceramization process.

2. Process according to claim 1, in which
- first the first end face (19) is scanned by a camera (10) and the scanned image is filed in a memory of a computer,
- the computer sweeps the image for coherent zones (2, 3, 4, 5) of channels (6) which within preselectable tolerances correspond to the setpoint geometry of a corresponding zone of an ideal honeycomb monolith,
- the processing path of the dosing heads (17, 18) controlled by the computer is defined,
- in accordance with the defined processing path, the nozzles (22, 23) of the respective dosing heads (17, 18) are lowered into the channels to be closed, the plug substance is introduced into the end regions of the channels and then the nozzles (22, 23) are removed from said channels,
- the monolith (1), after plugging of the channels at the first end face (19), is rotated through 180° and in a corresponding manner the channels at the other end face (20) are closed in a pattern complementary to that at the first end face (19).

3. Process according to claim 1 or 2, in which the contours of the determined zones form a rectangle.

4. Apparatus for effecting the process according to one of claims 1 to 3, having
- a slide device (12, 13, 21), which may be motor-driven in the three spatial axes (x, y, z) and has a clamping and turning device (11), which may be swivelled in a powered manner about its vertical axis by a slewing mechanism (14) and in which the honeycomb monolith (1) is clampable so as to be capable of swivelling about the horizontal axis (x),
- a camera (10) which is disposed above the one end face (19) of the monolith (1) clamped in the clamping and turning device (11), scans the end face (19) and passes the image data to a memory of a computer,
- at least two dosing heads (17, 18), each having a different number of nozzles (22, 23), which are connected by lines (24, 25) to a dosing installation (16) for the viscous plug substance and towards which the monolith (1) may be moved through control of the slide device (12, 13, 21) and the clamping and turning device (11) in accordance with the definition of the processing path by the computer in order to introduce the plug substance into the end regions of the channels (6) of the monolith (1).

5. Apparatus according to claim 4, in which the dosing heads (17, 18) and the camera (10) are disposed, rigidly supported in a frame (26), above the monolith (1) held in the clamping and turning device (11).

6. Apparatus according to claim 4 or 5, in which the nozzles of the dosing heads (17, 18) are disposed each diagonally opposite one another in a square overall arrangement.

## Revendications

1. Procédé de fabrication d'un filtre sous la forme d'un corps monolithique (1) céramique en nid d'abeilles, comprenant une multitude de canaux de passage (6) qui sont fermés en alternance avec un obturateur sur les côtés frontaux (19,20) du corps monolithique (1), à partir d'une pièce brute de corps monolithique en nid d'abeilles en matériau céramisable avec des canaux (6) ouverts sur les deux côtés, de la masse d'obturation étant introduite dans les différents canaux à fermer directement par une tête d'injection à buses d'un dispositif de distribution dosée, caractérisé par le fait que
- on détermine sur les deux côtés frontaux (19,20) des zones (2,3,4,5) de canaux (6) qui correspondent, avec des tolérances prédéfinies, à la géométrie de consigne d'un corps monolithique idéalisé en nid d'abeilles, de telle manière que les zones contiennent un nombre aussi élevé que possible de canaux (6),
- on déplace par moteur et on commande des têtes d'injection (17,18) du dispositif de distribution dosée, ayant des buses en nombres différents et abaissées dans les canaux (6) à fermer, en vue de l'introduction de masse d'obturation visqueuse dans la zone d'extrémité de ces canaux, de telle manière qu'en fonction de la détermination précitée des zones de canaux (6), on utilise le plus fréquemment la tête d'injection (17) ayant le plus grand nombre de buses (22) et ensuite la tête d'injection ayant le nombre de buses immédiatement inférieur, jusqu'à ce que tous les canaux prévus (6) soient fermés, et on soumet le corps monolithique (1) en nid d'abeilles, ainsi préparé, à un processus de céramisation.

2. Procédé suivant la revendication 1, suivant lequel
- on explore d'abord le premier côté frontal (19) par un analyseur d'images (10) et on stocke l'image résultant de l'exploration dans une mémoire d'un calculateur,
- on analyse l'image par le calculateur pour déterminer des zones (2,3,4,5) de canaux (6) contigus qui, avec des tolérances prédéfinies, correspondent à la géométrie de consigne d'une zone correspondante d'un corps monolithique idéalisé en nid d'abeilles,
- on détermine la trajectoire de travail des têtes d'injection (17,18) commandées par le calculateur,
- en fonction de la trajectoire de travail déterminée, on abaisse les buses (22,23) des têtes d'injection (17,18) respectives, dans les canaux à fermer, on introduit la masse d'obturation dans les zones d'extrémités des canaux et on retire ensuite les buses (22,23) des canaux,
- après obturation des canaux sur le premier côté frontal (19), on retourne de 180° le corps monolithique (1) et on ferme de façon correspondante les canaux sur l'autre côté frontal (20) suivant un dessin complémentaire de celui sur le premier côté frontal (19).

3. Procédé suivant revendications 1 ou 2, suivant lequel les contours des zones déterminées forment un rectangle.

4. Dispositif pour la mise en oeuvre du procédé suivant l'une des revendications 1 à 3, avec
- un agencement de chariots (12,13,21) déplaçable par moteur suivant les trois axes de l'espace (x,y,z), comprenant un dispositif de serrage et de retournement (11) qui est orientable par moteur autour de son axe vertical par un dispositif de rotation (14) et dans lequel le corps monolithique (1) en nid d'abeilles peut être serré de manière orientable autour de l'axe horizontal (x),
- un analyseur d'images (10) disposé au-dessus d'un côté frontal (19) du corps monolithique (1) serré dans le dispositif de serrage et de retournement (11), cet analyseur explorant le côté frontal (19) et envoyant les informations d'image à une mémoire d'un calculateur,
- au moins deux têtes d'injection (17,18) ayant des buses (22,23) en nombres différents, qui sont reliées par des conduites (24,25) à une installation de distribution dosée (16) pour la masse d'obturation visqueuse et desquelles le corps monolithique (1) peut être rapproché, par commande de l'agencement de chariots (12,13,21) ainsi que du dispositif de serrage et de retournement (11), selon la détermination de la trajectoire de travail par le calculateur, en vue de l'introduction de la masse d'obturation dans les zones d'extrémités des canaux (6) du corps monolithique (1).

5. Dispositif suivant la revendication 4, dans lequel les têtes de dosage (17,18) et l'analyseur d'images (10) sont montés rigidement dans un cadre (26) au-dessus du corps monolithique (1) maintenu dans le dispositif de serrage et de retournement (11).

6. Dispositif suivant la revendication 4 ou 5, dans lequel les buses des têtes de dosage (17,18) sont disposées, dans un agencement d'ensemble carré, respectivement dans des positions diagonalement opposées.
